Europäisches Patentamt

(19) **European Patent Office**

Office européen des brevets

(11) Numéro de publication: **0 082 044 B1**

(12) **FASCICULE DE BREVET EUROPEEN**

(45) Date de publication du fascicule du brevet: **19.02.86**

(51) Int. Cl.⁴: **B 60 T 8/26,** B 60 T 8/18

(21) Numéro de dépôt: **82402184.4**

(22) Date de dépôt: **30.11.82**

(54) **Régulateur de freinage pour véhicule.**

(30) Priorité: **11.12.81 FR 8123210**

(43) Date de publication de la demande:
**22.06.83 Bulletin 83/25**

(45) Mention de la délivrance du brevet:
**19.02.86 Bulletin 86/8**

(84) Etats contractants désignés:
**DE GB IT**

(56) Documents cités:
**DE - A - 2 638 190**
**DE - A - 2 939 621**
**DE - B - 1 257 604**
**FR - A - 2 155 887**
**FR - A - 2 354 906**
**FR - E - 92 663**

(73) Titulaire: **SOCIETE DE L'USINE DE LA MARQUE,**
**52, avenue des Champs Elysées, F-75008 Paris (FR)**

(72) Inventeur: **Schladerer, Max, THOMSON-CSF**
**SCPI 173, bld Haussmann, F-75379 Paris Cedex 08 (FR)**

(74) Mandataire: **Thrierr, Françoise et al, THOMSON-CSF**
**SCPI 173, Bld Haussmann, F-75379 Paris Cedex 08 (FR)**

ACTORUM AG

## Description

L'invention se rapporte aux systèmes de freinage des véhicules, notamment des véhicules automobiles; elle concerne, plus précisément, un régulateur de freinage destiné plus particulièrement à être intercalé entre le maître-cylindre et les moteurs de freins des roues arrières d'un véhicule pour limiter l'effort de freinage appliqué à ces roues en fonction de la charge de l'essieu correspondant. Un tel dispositif, appelé aussi limiteur-compensateur de freinage est largement mis en œuvre sur les véhicules automobiles; sa fonction est de faire varier la pression du fluide fournie aux moteurs de freins pour accroître l'efficacité du freinage en réduisant les risques de blocage des roues arrières et aussi de dérapage du véhicule au moment du freinage de celui-ci.

Un tel dispositif est décrit dans le brevet français FR-A-2155887 concernant une valve correctrice de freinage. Elle comprend un corps dans lequel une première chambre dite «chambre d'entrée» et une seconde chambre dite «chambre de sortie» communique entre elles et sont reliées par l'intermédiaire de conduits, respectivement, à une source de pression commandée et à un ou plusieurs organes récepteurs dont la fonction est d'imprimer un couple de freinage sur certaines des roues d'un véhicule. Ces chambres d'entrée et de sortie communiquent entre elles à travers l'ouverture centrale d'un siège annulaire. Un clapet mobile disposé dans la chambre de sortie est solidaire d'un piston traversant la paroi du bloc et est susceptible de coopérer avec le siège annulaire pour interrompre la communication entre les deux chambres dès que la pression dans la chambre de sortie est supérieure à une pression de consigne, ou pression de coupure, déterminée par une force de réaction, généralement variable, appliquée au piston, cette force de réaction étant sensiblement proportionnelle à la charge de roues dont on veut contrôler l'effort de freinage.

Dans un tel dispositif, largement utilisé sur les véhicules automobiles, une fois le clapet en appui sur son siège, tout accroissement de la pression de commande n'est pas transmis, la pression dans la chambre de sortie restant constante.

On souhaite en premier lieu que la pression du fluide, dans la chambre de sortie, varie au-delà de la pression de consigne, proportionnellement à la pression du fluide dans la chambre d'entrée.

En cours de fonctionnement, le clapet est de nouveau dégagé de son siège dès que la force de réaction augmente, consécutivement à un accroissement de la charge des roues, ce qui a pour effet de permettre l'établissement d'une nouvelle pression de consigne supérieure à la pression de consigne établie à l'instant initial de freinage.

Par contre, lors d'une diminution de la force de réaction, le clapet demeure en appui sur son siège et la pression dans la chambre de sortie conserve sa valeur initiale atteinte au début de l'opération de freinage. Dans ce dernier cas, il en résulte que la pression de consigne est supérieure à la pression optimale de commande des moteurs de freins.

De plus, les diamètres du clapet et du piston étant égaux, lors du relachement complet de la pression de commande ce clapet a tendance à rester coller sur son siège, le système reste alors fermé et n'est pas en mesure de transmettre une nouvelle augmentation de la pression de commande.

On connaît par le certificat d'addition français FR-E-92663 un correcteur de freinage palliant les inconvénients précités. Mais sa conception complexe met en œuvre plusieurs pièces déformables (rondelle et membrane élastique, piston déformable). La durée de vie d'un tel dispositif se trouve fortement affectée, et le réglage très délicat.

Dans le but de remédier aux inconvénients précités, l'invention propose un régulateur de freinage comprenant un bloc traversé par un alésage à gradin obturé par un bouchon à l'une de ses extrémités, et un piston à clapet disposé axialement dans cet alésage et comprenant, à l'une de ses extrémités, un piston qui se projette à l'extérieur et est soumis à une force antagoniste et, à l'autre extrémité, un clapet, une cloison annulaire mobile dont le déplacement est limité par au moins une première butée et disposée coaxialement dans l'alésage à gradin pour fournir une première et une seconde chambres communicantes, reliées respectivement à des orifices d'entrée et de sortie, l'ouverture centrale de cette cloison annulaire étant traversée par le piston à clapet et munie d'un siège de clapet, caractérisé en ce que la section du piston est sensiblement supérieur à la section du clapet, et en ce qu'il comprend un ressort de rappel de la cloison annulaire, disposé dans la chambre de sortie entre le bouchon de fermeture et la paroi de la cloison en regard de ce bouchon.

Les caractéristiques et les avantages que présentent l'invention ressortiront plus clairement de la description détaillée qui va suivre, faite en regard des dessins annexés qui illustrent le concept de l'invention et représentent un mode de réalisation du régulateur de freinage. Sur ces dessins, des références alphanumériques identiques indiquent des éléments similaires.

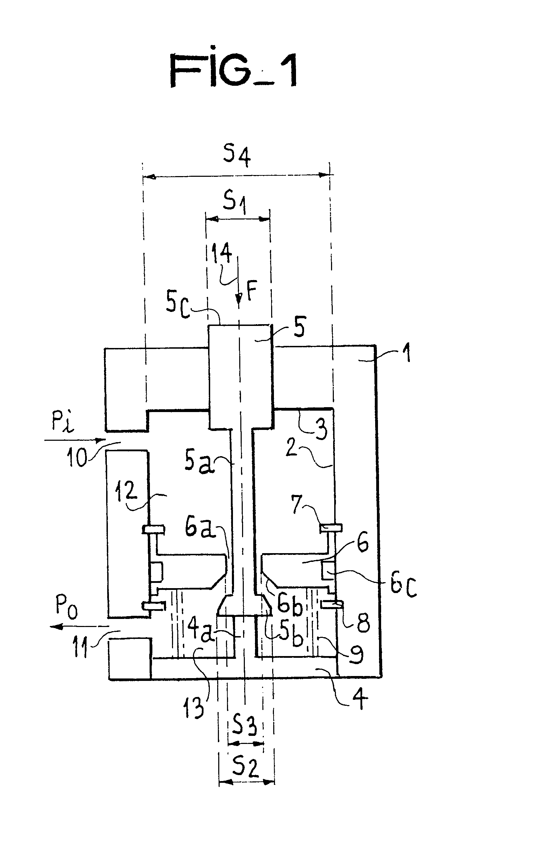

La figure 1 représente, sous une forme schématique, un régulateur de freinage selon l'invention.

La figure 1 représente, selon une vue en coupe, conformément à l'invention, un mode de réalisation détaillé du régulateur de freinage.

La figure 1 représente, sous une forme schématique, un régulateur de pression selon l'invention. Ce régulateur comprend les éléments suivants:

— un corps 1 dans lequel est pratiqué un alésage étagé 2 comportant un gradin 3, cet alésage étant obturé à l'une de ses extrémités par un bouchon de fermeture hermétique 4, faisant également office de butée,

— un piston à clapet 5 disposé axialement dans l'alésage, ce piston à clapet comprenant: le piston 5 proprement dit, monté de façon étanche, qui coulisse à travers la paroi du bloc et se projette à l'extérieur, et une tige de transmission 5a solidaire d'un clapet 5b, de forme sensiblement cylindro-cônique représenté en appui sur la butée 4a fournie par le bouchon 4,

– une cloison annulaire rigide 6 disposée coaxialement et montée de façon étanche dans l'alésage, cette cloison annulaire libre de coulisser dans l'alésage comprend: une ouverture centrale 6a traversée par la tige de transmission 5a du piston 5, un siège de clapet 6b et un joint d'étanchéité 6c,

– une première butée 7 destinée à limiter le déplacement de la cloison annulaire 6 vers le gradin 3 et, éventuellement, une seconde butée 8 pour limiter le déplacement de cette cloison annulaire vers le bouchon de fermeture 4,

– un ressort de rappel 9, de faible raideur, disposé entre le bouchon de fermeture et la cloison annulaire, pour assurer le rappel de celle-ci contre la première butée 7,

– un orifice d'entrée 10 destiné à relier le régulateur de freinage au maître-cylindre du système de freinage du véhicule,

– un orifice de sortie 11 destiné à relier le régulateur de freinage aux moteurs de freins des roues arrières du véhicule.

La cloison annulaire 6 délimite, dans l'alésage 2, une première chambre 12 reliée à l'orifice d'entrée 10 et une seconde chambre 13 reliée à l'orifice de sortie 11; ces deux chambres peuvent communiquer entre elles par l'orifice central 6a de la cloison annulaire 6 et cette communication peut être interrompue lorsque le clapet 5b est sollicité sur le siège de clapet 6b, les surfaces côniques du siège et du clapet étant susceptibles de coopérer de façon étanche.

La tête de piston 5c est l'objet d'une force antagoniste F, encore appelée force de réaction, dirigée suivant la flèche 14. Cette force antagoniste F est fournie par un organe de commande mécanique, ou autre, comprenant éventuellement des moyens élastiques précontraints. Le bloc 1 du régulateur comprend, en outre, des moyens de fixation (non représentés) au chassis du véhicule, alors que l'organe de commande est relié généralement à un élément de l'essieu des roues arrières. Un tel organe de commande a déjà été largement décrit dans la littérature technique et ne sera pas repris en détail ici. La liaison de cet organe de commande est telle que toute variation de la charge des roues arrières du véhicule produit une modification sensiblement proportionnelle de la force antagoniste F.

La section $S_1$ du piston 5 est déterminée par la pression de consigne $P_c$, telle que:

$$P_c = \frac{F}{S_1}$$

La section $S_2$ du clapet 5b est sensiblement inférieure à la section $S_1$ du piston 5, tandis que la section $S_3$ de l'ouverture centrale 6a de la cloison annulaire 6 est inférieure à la section $S_2$ du clapet 5b, tout en présentant une faible restriction au passage du fluide autour de la tige de transmission 5a. D'autre part, la section $S_4$ de l'alésage 2 est déterminée par le gain de transfert (G) du régulateur tel que:

$$G = 1 - \frac{S_1}{S_4}$$

inférieur à l'unité lorsque le clapet 5b est sollicité fortement sur son siège 6b.

La fonction du ressort de rappel 9, de faible raideur, est de maintenir en appui la cloison annulaire 6 sur la première butée 7 pour éviter que prenne naissance un phénomène d'oscillation avant la fermeture du clapet 5b. La raideur de ce ressort de rappel peut être calibrée pour contribuer à la fonction compensatrice qui est alors dépendante des variations de volume des circuits de fluide et de la modification du module de compressibilité du fluide de freinage.

Le fonctionnement du régulateur de freinage qui vient d'être décrit est le suivant:

La pédale de freinage du véhicule étant relâchée, les positions relatives des différents éléments correspondent à celles représentées sur la figure 1. Le clapet 5b est dégagé de son siège 6b pour assurer le libre passage du fluide entre la chambre d'entrée 12 et la chambre de sortie 13.

Lorsque le conducteur actionne la pédale de freinage du véhicule, la pression d'entrée $P_i$ croît progressivement et le fluide s'écoule dans la chambre de sortie à travers l'ouverture centrale 6a de la cloison annulaire 6, en appui sur sa butée supérieure 7. La force antagoniste F appliquée sur la tête de piston 5c s'oppose au déplacement du piston à clapet 5 sur lequel s'exerce une force de pression $P_i S_1$. Dès que cette force de pression est supérieure à la force antagoniste F, le clapet 5b est sollicité sur son siège 6b et les surfaces côniques de ces éléments viennent en contact pour obturer la communication entre les deux chambres. A cet instant, la pression établie dans la chambre de sortie 13, appelée «pression de consigne», ou encore «pression d'intervention», atteint une valeur $P_c$ déjà définie.

L'orsque la pression d'entrée $P_i$ continue à croître, l'ensemble constitué par le piston 5 et la cloison annulaire 6 se déplace en direction du bouchon de fermeture 4 sous l'effet d'une force de pression proportionnelle à $(S_4 - S_1)$ qui est transmise dans la chambre de sortie 13 pour fournir une pression de sortie $P_0$ égale à:

$$P_0 = P_i - \frac{S_1}{S_4} (P_i - P_c)$$

Lorsque la pression d'entrée $P_i$ atteint une valeur importante au-delà de laquelle la cloison annulaire 6 vient en appui sur la seconde butée 8, dès cet instant la pression de sortie $P_0$ conserve une valeur constante.

Inversement, lorsque le conducteur relâche la pédale de freinage du véhicule, la pression d'entrée $P_i$ diminue. Par voie de conséquence, l'ensemble constitué par le piston 5 et la cloison annulaire 6 se déplace pour venir en appui sur la première butée 7; la force de pression $P_0$ appli-

quée sur la section $S_2$ du clapet 5b, plus faible que la section $S_1$ du piston 5, étant alors inférieure à la force antagoniste F appliquée à la tête de piston $5_c$, la communication entre les deux chambres 12, 13 est rétablie.

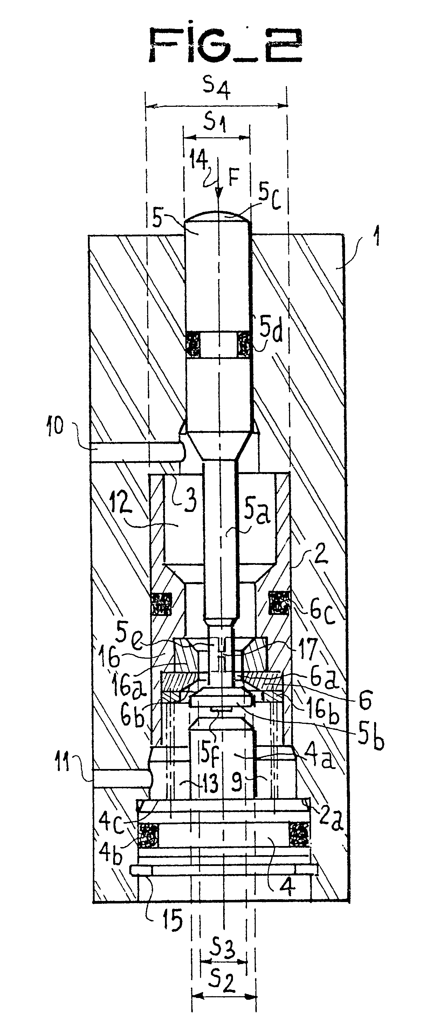

Si au cours du freinage du véhicule, la charge des roues arrières contrôlées par le régulateur augmente, la force antagoniste F croît proportionnellement et le clapet 5b est dégagé de son siège 6b, permettant ainsi l'établissement d'une nouvelle valeur de la pression d'intervention, dans la chambre de sortie, qui s'oppose à la nouvelle force antagoniste. Inversement, si la charge des roues arrières diminue, l'ensemble constitué par le piston 5 et la cloison annulaire 6 se déplace dans la direction opposée à celle du bouchon de fermeture 4 jusqu'à l'établissement d'un nouvel équilibre des pressions $P_i$ et $P_0$ qui produit une pression plus faible dans la chambre 13. La figure 2 représente, selon une vue en coupe, un mode de réalisation d'un régulateur de freinage conforme à l'invention.

Le corps 1 du dispositif peut être réalisé par fonderie d'un matériau tel que la fonte ou un alliage léger ou un matériau plastique chargé ou non de forte raideur et de bonnes propriétés rhéologiques; dans ce corps sont usinés un alésage étagé 2 comportant un gradin 3 et les orifices d'entrée 10 et de sortie 11. Le piston à clapet 5, dans sa partie coulissante, comporte un joint d'étanchéité 5d placé dans une gorge circulaire ménagée à cet effet. La tige de transmission 5a, de grande raideur, comporte, dans sa partie terminale, au droit de l'ouverture centrale 6a de la cloison annulaire 6, un étranglement 5e dans le but de réduire la perte de charge dans cette ouverture et le clapet 5b est muni d'un téton 5f destiné à réduire l'adhérence du clapet sur la butée d'appui 4a fournie par le bouchon de fermeture 4 de l'alésage; ce bouchon étant muni d'un joint d'étanchéité $4_b$ placé dans une gorge circulaire pour assurer un moyen hermétique de fermeture. Le bouchon de fermeture 4, en appui sur un épaulement 2a est maintenu en place, par exemple, par un anneau d'arrêt 15.

Selon ce mode de réalisation, la cloison annulaire 6 est portée par un élément cylindrique 16 venant en appui sur le gradin 3 de l'alésage 2 qui fournit un moyen de butée pour limiter le déplacement de la cloison 6 sous l'effort d'un ressort de rappel 9 de faible raideur. L'élément cylindrique 16 du dispositif peut être réalisé en acier, ou en alliage léger ou en un matériau plastique chargé ou non, de grande raideur et présentant de bonnes caractéristiques rhéologiques. La cloison annulaire 6 est réalisée préférentiellement en un matériau tel qu'un élastomère de forte raideur; à cet effet, cette cloison annulaire est maintenue sur l'élément cylindrique 16 entre un manchon 16a réalisé en un matériau plastique de raideur moyenne et présentant de bonnes caractéristiques rhéologiques, et une bague 16b. Dans le but de faciliter la fabrication et le montage du piston à clapet 5, le manchon 16a comporte une fente 17 ou, selon une variante de réalisation, est constitué de deux éléments qui sont disposés en regard l'un de l'autre. Ce mode de réalisation de la cloison annulaire mobile présente plusieurs avantages: le guidage du déplacement de cette cloison annulaire est assuré par une portée importante fournie par l'élément cylindrique 16; le moyen permettant de limiter le déplacement de la cloison dans la direction opposée au bouchon de fermeture 4 est fournie par le gradin 3 de l'alésage 2 et le piston à clapet 5 peut être réalisé en une seule pièce. Enfin, on notera qu'un second moyen permettant de limiter le déplacement de la cloison annulaire 6 suivant la direction du bouchon de fermeture 4 peut être fournie par la partie inférieure de l'élément cylindrique 16, en dimensionnant cette partie inférieure afin qu'elle vienne en appui sur l'embase 4c du bouchon de fermeture 4 pour limiter la pression de sortie $P_0$ à une valeur maximale $P_0$ (Max). Pour éviter que la partie inférieure de l'élément cylindrique 16 n'obture l'orifice de sortie 11 de la seconde chambre 13, il est nécessaire de ménager des ouvertures dans cette partie inférieure. Les surfaces de contact du clapet 5b et de son siège 6b peuvent être de forme cônique, sphérique ou plane.

Le fonctionnement du régulateur de freinage décrit à la figure 2 est identique à celui décrit à la figure 1 et, en conséquence, ne sera pas repris ici.

Dans le cas d'une application du régulateur de freinage à un système à double circuit, le bloc 1 peut comporter deux régulateurs identiques opérant en parallèle; dans ce cas, la force antagoniste F est portée à une valeur double et également répartie sur les têtes de piston 5c.

On voit maintenant plus clairement les avantages que présente un régulateur de freinage conforme à l'invention: d'une part, les effets des variations du volume du circuit de fluide des roues arrières et de compressibilité du fluide de freinage sont éliminés et, d'autre part, la caractéristique de transfert $G = \Delta P_0/\Delta P_i$, après le point d'intervention, peut être adaptée par construction pour fournir un freinage optimal des roues arrières du véhicule tout en réduisant le risque d'instabilité du véhicule lors d'un freinage brutal.

Un régulateur de freinage selon l'invention trouve son application dans les systèmes de freinge du type double ou simple circuit.

**Revendications**

1. Régulateur de freinage comprenant un bloc (1) traversé par un alésage (2) à gradin (3) obturé par un bouchon (4) à l'une de ses extrémités, et un piston à clapet disposé axialement dans cet alésage et comprenant, à l'une de ses extrémités, un piston (5) qui se projette à l'extérieur et est soumis à une force antagoniste (F) et, à l'autre extrémité, un clapet (5b), une cloison annulaire (6) mobile dont le déplacement est limité par au moins une première butée (7) et disposée coaxialement dans l'alésage à gradin pour fournir une première (12) et une seconde chambres (13) communicantes, reliées respectivement à des orifices d'entrée (10)

7 0082044 8

et de sortie (11), l'ouverture centrale (6a) de cette cloison annulaire (6) traversée par le piston à clapet étant munie d'un siège de clapet (6b), caractérisé en ce que la section (S$_1$) du piston (5) est sensiblement supérieure à la section (S$_2$) du clapet (5b), et en ce qu'il comprend un ressort de rappel (9) de la cloison annulaire (6), disposé dans la chambre de sortie entre le bouchon de fermeture (4) et la paroi de la cloison en regard de ce bouchon.

2. Régulateur selon la revendication 1, caractérisé en ce qu'il comprend une seconde butée (8) pour limiter le déplacement de la cloison (6) dans la direction du bouchon de fermeture (4) de l'alésage (2).

3. Régulateur selon les revendications 1 et 2, caractérisé en ce que la cloison annulaire (6) est portée par un élément cylindrique (16) qui coulisse de façon étanche dans l'alésage (2).

4. Régulateur selon la revendication 3, caractérisé en ce que la cloison mobile (6), réalisée en un matériau élastique, est insérée entre un manchon (16a) et une bague (16b) solidaires de l'élément cylindrique.

5. Régulateur selon la revendication 4, caractérisé en ce que le manchon (16a) comporte au moins une fente transversale (17).

6. Régulateur selon la revendication 3, caractérisé en ce que la première butée (7) est fournie par le gradin (3) de l'alésage (2).

7. Régulateur selon la revendication 1, caractérisé en ce que le clapet (5b) est réalisé en un matériau élastique et est disposé coaxialement sur la tige de piston (5a).

8. Régulateur selon la revendication 7, caractérisé en ce que le clapet (5b) est maintenu sur la tige de piston (5a) par une rondelle (5f) qui constitue le moyen d'appui de ce clapet sur le bouchon de fermeture (4) de l'alésage (2).

## Patentansprüche

1. Bremsregler mit einem Block (1), der von einer mit Stufe (3) versehenen und mit einem Stopfen (4) an einem Ende verschlossenen Bohrung durchquert wird, und mit einem Ventilkolben, der axial in der Bohrung sitzt und an einem seiner Enden einen Kolben (5), der nach aussen vorragt und einer Gegenkraft (F) unterliegt, und am anderen Ende ein Ventil (5b) trägt, und mit einer beweglichen Ringwand (6), deren Verschiebund durch mindestens einen ersten Anschlag (7) begrenzt ist und die koaxial in der mit Stufe versehenen Bohrung sitzt, um eine erste und eine zweite Kammer (12, 13) zu bilden, die miteinander in Verbindung stehen und an Einlass- bzw. Auslassöffnungen (10, 11) angeschlossen sind, wobei die zentrale Offnung (6a) dieser vom Ventilkolben durchzogenen Ringwand (6) einen Ventilsitz aufweist, dadurch gekennzeichnet, dass der Querschnitt (S$_1$) des Kolbens (5) deutlich grösser als der Querschnitt (S$_2$) des Ventils (5b) ist und dass er eine Rückstellfeder (9) für die Ringwand (6) aufweist, die in der Auslasskammer zwischen dem Verschlussstopfen (4) und der Wand angeordnet ist, die dem Stopfen gegenüberliegt.

2. Regler nach Anspruch 1, dadurch gekennzeichnet, dass er einen zweiten Anschlag (8) aufweist, um die Verschiebung der Wand (6) in Richtung des Verschlussstopfens (4) der Bohrung (2) zu begrenzen.

3. Regler nach den Ansprüchen 1 und 2, dadurch gekennzeichnet, dass die Ringwand (6) auf einem zylindrischen Element (16) sitzt, das in dichter Form in der Bohrung (2) gleitet.

4. Regler nach Anspruch 3, dadurch gekennzeichnet, dass die bewegliche Wand (6), die aus einem elastischen Material besteht, zwischen einer Muffe (16a) und einem Ring (16b) eingefügt ist, die beide am zylindrischen Element befestigt sind.

5. Regler nach Anspruch 4, dadurch gekennzeichnet, dass die Muffe (16a) mindestens einen transversalen Schlitz (17) aufweist.

6. Regler nach Anspruch 3, dadurch gekennzeichnet, dass der erste Anschlag (7) von der Stufe (3) der Bohrung (2) geliefert wird.

7. Regler nach Anspruch 1, dadurch gekennzeichnet, dass das Ventil (5b) aus einem elastischen Material besteht und koaxial auf der Kolbenstange (5a) sitzt.

8. Regler nach Anspruch 7, dadurch gekennzeichnet, dass das Ventil (5b) auf der Kolbenstange (5a) durch eine Ringscheibe (5f) festgehalten wird, die das Mittel bildet, durch das das Ventil auf den Verschlussstopfen (4) der Bohrung (2) aufgedrückt wird.

## Claims

1. Brake governor, comprising a block (1) traversed by a boring (2) with a step (3), this boring being closed at one of its ends by a plug (4), and comprising a valve piston disposed coaxially in said boring and containing at one of its ends a piston (5) which extends to the outside and which is submitted to a counter-force (F), and at its other end a valve (5b), a movable annular wall (6), the displacement of which is restricted by at least a first stop (7) and which is disposed coaxially in the stepped boring for defining a first (12) and a second chamber (13) which communicate with each other and which are respectively connected to inlet and outlet openings (10, 11), the central opening (6a) of said annular wall (6) which is traversed by the valve piston being furnished with a valve seat (6b), characterized in that the sectional area (S$_1$) of the piston (5) is substantially larger than the sectional area (S$_2$) of the valve (5b), and that it comprises a return spring (9) for the annular wall (6), this spring being disposed in the outlet chamber between the closing plug (4) and that side of the wall which faces the plug.

2. A governor according to claim 1, characterized in that it comprises a second stop (8) for restricting the displacement of the wall (6) in the direction of the closing plug (4) of the boring (2).

3. A governor according to claims 1 and 2, characterized in that the annular wall (6) is supported by a cylindrical element (16) which slides in a sealed manner in the boring (2).

4. A governor according to claim 3, characterized in that the movable wall (6), made of a resilient material, is inserted between a collar (16a) and a ring (16b) which are fixed to the cylindrical element.

5. A governor according to claim 4, characterized in that the collar (16a) comprises at least one transversal slot (17).

6. A governor according to claim 3, characterized in that the first stop (7) is realized by the step (3) of the boring (2).

7. A governor according to claim 1, characterized in that the valve (5b) is made of a resilient material and is disposed coaxially on the piston rod (5a).

8. A governor according to claim 7, characterized in that the valve (5b) is maintained on the piston rod (5a) by a washer (5f) which constitutes the press means of the valve on the closing plug (4) of the boring (2).

# FIG_1

FIG_2